# EUROPÄISCHE PATENTSCHRIFT

(11) **EP 0 965 620 B1**
(45) Veröffentlichungstag und Bekanntmachung des Hinweises auf die Patenterteilung: **23.04.2003**
(21) Anmeldenummer: 99111277.2
(22) Anmeldetag: 10.06.1999
(51) Int. Cl.: C09D 4/06, C08F 290/06

(54) **Strahlenhärtbare, witterungsstabile Massen, enthaltend Carbonat(meth)acrylate**
Weather resistant carbonate acrylate radiation-curable coating compositions
Compositions de revêtement durcissables par irradiation à base de carbonate-acrylate, résistantes aux imtempéries

(30) Priorität: 18.06.1998 DE 19827084
(43) Veröffentlichungstag der Anmeldung: 22.12.1999
(73) Patentinhaber: BASF AKTIENGESELLSCHAFT, 67056 Ludwigshafen (DE)
(72) Erfinder: Schwalm, Reinhold, Dr., 67157 Wachenheim (DE)

(56) Entgegenhaltungen:
- EP-A- 0 787 749
- US-A- 4 639 472
- PATENT ABSTRACTS OF JAPAN vol. 017, no. 551 (C-1117), 5. Oktober 1993 (1993-10-05) & JP 05 155729 A (NIPPON OIL & FATS CO LTD), 22. Juni 1993 (1993-06-22)

## Beschreibung

Die Erfindung betrifft die Verwendung von strahlungshärtbaren Massen, welche 0,5 bis 100 Gew.-%, bezogen auf die Gesamtmenge der strahlungshärtbaren Verbindungen, Carbonat(meth)acrylate enthalten, als Beschichtungsmasse für Außenanwendungen.

Strahlungshärtbare Massen werden bisher überwiegend für die Beschichtung von Holz, Papier und Kunststoffen im Innenbereich eingesetzt. Für Außenanwendungen ist eine Beständigkeit gegen Witterungseinflüsse, z.B. eine geringe Vergilbungsneigung, Hydrolysestabilität, mechanische Stabilität unter Bewitterungsbedingungen, insbesondere Stabilität gegen Rißbildung sowie Säure- und Chemikalienresistenz erforderlich.

Neben der notwendigen Witterungsstabilität sind gute Verarbeitungseigenschaften, z.B. eine geringe Geruchsbelastung und eine hohe Reaktivität, sowie gute mechanische Eigenschaften der erhaltenen Beschichtungen, z.B. eine hohe Flexibilität und Härte gewünscht.

Bisher bekannte strahlungshärtbare Massen, wie sie z.B. aus IP 62-132570 und WO 92/17337 bekannt sind, erfüllen die vorstehenden Erfordernisse noch nicht in ausreichendem Maße.

Aus EP-A-92269 und DE-A-2757086 sind Carbonat(meth)acrylate bekannt. Außenanwendungen werden nicht beschrieben.

Aufgabe der vorliegenden Erfindung waren witterungsstabile, strahlungshärtbare Massen für Außenanwendungen, welche eine hohe Witterungsstabilität, gute Verarbeitungseigenschaften und gleichzeitig gute mechanische Eigenschaften aufweisen.

Demgemäß wurde die obige Verwendung gefunden.

Die strahlungshärtbaren Massen enthalten 0,5 bis 100 Gew.-%, vorzugsweise 5 bis 80 Gew.-%, besonders bevorzugt 10-50 Gew.-% Carbonat(meth)acrylate. Die Angabe Gew.-% ist dabei auf die Summe der strahlungshärtbaren Verbindungen bezogen.

Die Carbonat(meth)acrylate enthalten im Mittel vorzugsweise 1 bis 5, insbesondere 1 bis 3, besonders bevorzugt 2 bis 3 Carbonatgruppen.

Die Carbonat(meth)acrylate enthalten im Mittel vorzugsweise 1 bis 5, insbesondere 2 bis 4, besonders bevorzugt 2 bis 3 (Meth)acrylgruppen und ganz besonders bevorzugt 2(Meth)acrylgruppen.

Das zahlungsmittlere Molekulargewicht Mₙ der Carbonat(meth)acrylate ist vorzugsweise kleiner 3000 g/mol, besonders bevorzugt kleiner 1500 g/mol, besonders bevorzugt kleiner 800 g/mol (bestimmt durch Gelpermestionschromatgraphie mit Polystyrol als Standard, Lösemittel Tetrahydrofuron).

Die Carbonat(meth)acrylate sind in einfacher Weise erhältlich durch Umesterung von Kohlensäureestern mit mehrwertigen, vorzugsweise zweiwertigen Alkoholen (Diolen, z.B. Hexandiol) und anschließende Veresterung der freien OH-Gruppen mit (Meth)acrylsäure) oder auch Umesterung mit (Meth)acrylsäureestern, wie es z.B. auch in EP 92 269 beschrieben ist. Erhältlich sind sie auch durch Umsetzung von Phosgen, Harnstoffderivaten mit mehrwertigen, z.B. zweiwertigen Alkoholen.

Besonders bevorzugte Carbonat(meth)acrylate sind solche der Formel: 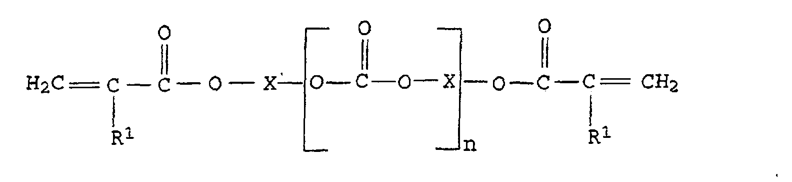 worin R¹ für H oder CH₃, X für eine C₂-C₁₈ Alkylengruppe und n für eine ganze Zahl von 1 bis 5, vorzugsweise 1 bis 3 steht.

R¹ steht vorzugsweise für H und X steht vorzugsweise für C₂ bis C₁₀ Alkylen, besonders bevorzugt für C₄ bis C₈ Alkylen. Ganz besonders bevorzugt steht X für C₆-Alkylen.

Vorzugsweise handelt es sich um aliphatische Carbonat-(meth)acrylate.

Neben den Carbonat(meth)acrylaten kann die strahlungshärtbare Masse weitere strahlungshärtbare Verbindungen enthalten.

In Betracht kommen insbesondere Urethan(meth)acrylate, Epoxid(meth)acrylate und Melamin(meth)acrylate.

Urethan(meth)acrylate sind z.B. erhältlich durch Umsetzung von Polyisocyanaten mit Hydroxyalkyl(meth)acrylaten und gegebenenfalls Kettenverlängerungsmitteln wie Diolen, Polyolen, Diaminen, Polyaminen oder Dithiolen oder Polythiolen. In Wasser ohne Zusatz von Emulgatoren dispergierbare Urethanacrylate enthalten zusätzlich noch ionische und/oder nicht ionische hydrophile Gruppen, welche z.B. durch Aufbaukomponenten wie Hydroxycarbonsäuren ins Urethanacrylat eingebracht werden.

Die Urethan(meth)acrylate haben vorzugsweise ein zahlenmittleres Molgewicht Mₙ von 500 bis 20 000, insbesondere von 750 bis 10 000 besonders bevorzugt 750 bis 3000 g/mol (bestimmt durch Gelpermeationschromatographie mit Polystyrol als Standard).

Die Urethan(meth)acrylate haben vorzugsweise einen Gehalt von 1 bis 5, besonders bevorzugt von 2 bis 4 Mol (Meth)acrylgruppen pro 1000 g Urethan(meth)acrylat.

Bevorzugte Aufbaukomponenten der Urethan(meth)acrylate sind
C₁₋C₈-Hydroxyalkyl(meth)acrylate,
C₂₋C₈-Alkandiole bzw. -polyole oder C₂-C₈-Alkamine als Kettenverlängerer; weiterhin können die Urethanacrylate auch Polyesterole oder Polyetherole als Aufbaukomponenten enthalten; bevorzugte Polyisocyanate sind

Dicyclohexylmethan-4,4'-diisocyanat, Hexamethylen-diisocyanat, Isophorondiisocyanat, Tetramethylen-diisocyanat, Trimethyl-hexamethylen-diisocyanat, Addukte von solchen Isocyanaten an mehrfunktionellen Alkoholen wie Trimethylolpropan, Di- oder Trimerisationsprodukte der Isocyanate, wie Biurete oder Isocyanurate.

Bevorzugt sind aliphatische Polyisocyanate, wobei der Begriff aliphatisch auch nicht aromatische alicyclische Verbindungen einschließen soll.

Bevorzugte Urethan(meth)acrylate sind aliphatische Urethanacrylate, welche aromatische Ringsysteme allenfalls in untergeordneten Mengen von z.B. weniger als 5 Gew.-%, bezogen auf die Jrethanacrylate, und besonders bevorzugt keine aromatischen Ringsysteme enthalten.

Epoxid(meth)acrylate sind erhältlich durch Umsetzung von Epoxiden mit (Meth)acrylsäure. Als Epoxide in Betracht kommen z.B epoxidierte Olefine oder Glycidylether, z.B. Bisphenol-A-diglycidylether oder aliphatische Glycidylether, wie Butandiol-diglycidether.

Melamin(meth)acrylate sind erhältlich durch Umsetzung von Melamin mit (Meth)acrylsäure.

Die Epoxid(meth)acrylate und Melamin(meth)acrylate haben vorzugsweise ein zahlenmittleres Molgewicht Mₙ von 500 bis 20000, besonders bevorzugt von 750 bis 10000 g/mol und ganz besonders bevorzugt von 750 bis 3000 g/mol; der Gehalt an (Meth)acrylgruppen beträgt vorzugsweise 1 bis 5, besonders bevorzugt 2 bis 4 /pro 1000 g Epoxid(meth)acrylat oder Melamin(meth)acrylat (Gelpermestionschromatographie, PS-Standard, THF-Lösemittel).

Bevorzugte strahlungshärtbare Massen enthalten
5 bis 80 Gew.-% C, besonders bevorzugt 10 bis 50 Gew.-% Carbonat(meth)acrylate a) und
20 bis 95 Gew.-%, besonders bevorzugt 50 bis 90 Gew.-%, Urethan(meth)acrylate, Epoxid(meth)acrylate oder Melamin(meth)acrylate b)

Neben den vorstehenden (Meth)acrylverbindungen kann die strahlungshärtbare Masse andere ethylenisch ungesättigte, radikalisch polymerisierbare Verbindungen enthalten.

Insbesondere genannt seien von den vorstehenden (Meth)acrylverbindungen a) und b) verschiedenen Verbindungen mit mindestens einer (Meth)acrylgruppe c).

In Betracht kommen Poly(meth)acrylate von aliphatischen Polyolen, insbesondere 2 bis 5 wertigen Alkoholen, die neben den Hydroxylgruppen keine weiteren funktionellen Gruppen oder allenfalls Ethergruppen enthalten.

Beispiele solcher Alkohole sind bifunktionelle Alkohole, wie Ethylenglykol, Propylenglykol, und deren höher kondensierte Vertreter, z.B. wie Diethylenglykol, Triethylenglykol, Dipropylenglykol, Tripropylenglykol ect., Butandiol, Pentandiol, Hexandiol, Neopentylglykol, Cyclohexandimethanol, trifunktionelle und höherfunktionelle Alkohole, wie Glycerin, Trimethylolpropan, Butantriol, Trimethylolethan, Pentaerythrit, Ditrimethylolpropan, Dipentaerythrit, Sorbit, Mannit und die entsprechenden alkoxylierten, insbesondere ethoxy- und propoxylierte Alkohole.

Geeignete Poly(meth)acrylate haben insbesondere ein Molgewicht unter 1000 g/mol, besonders bevorzugt unter 600 g/mol und haben 2 bis 4 (Meth)acrylgruppen im Molekühl, d.h. es handelt sich um Di-, Tri oder Tetraacrylate.

Weitere von a) und b) verschiedene Verbindungen mit mindestens einer (Meth)acrylgruppe c) sind z.B. Polyester(meth)acrylate, oder auch Mono(meth)acrylate wie Butylacrylat, Cyclohexylacrylat ect. Monoacrylate werden insbesondere als zusätzlichen Reaktivverdünner eingesetzt.

Bei allen vorstehenden Verbindungen sind grundsätzlich die Acrylverbindungen gegenüber den Methacrylverbindungen bevorzugt.

Die strahlungshärtbaren Massen können auch strahlungshärtbare Verbindungen ohne Acrylgruppen d) enthalten. In Betracht kommen z.B. Vinyl- oder Alkylgruppen enthaltende Verbindungen wie Vinylester, aromatische Vinylverbindungen, z.B. Styrol, Vinylether, deren Oligomere oder Polymere, auch ungesättigte Polyester ect.

Bevorzugt setzt sich ihre Gesamtmenge der strahlungshärtbaren Verbindungen wie folgt zusammen aus
5 bis 80 Gew.-%, besonders bevorzugt 10 bis 50 Gew.-% a),
20 bis 95 Gew.-%, besonders bevorzugt 50 bis 90 Gew.-% b),
0 bis 50 Gew.-%, besonders bevorzugt 0 bis 10 Gew.-% c),
0 bis 50 Gew.-%, besonders bevorzugt 0 bis 10 Gew.-% d)

Bevorzugt enthalten die strahlungshärtbaren Massen nur geringe oder keine aromatischen Anteile. Der Gehalt an aromatischen C-Atomen (d.h. C-Atomen, die Bestandteile eines aromatischen Ringsystems sind) liegt vorzugsweise unter 5 Gew.-% besonders bevorzugt unter 2 Gew.-%, ganz besonders bevorzugt unter 0,5 Gew.-%, bezogen auf die Gesamtmenge der strahlungshärtbaren Verbindungen. Insbesondere liegt er bei 0 %.

Die strahlungshärtbaren Verbindungen können in den strahlungshärtbaren Massen lösungsmittelfrei, gelöst in organischen Lösungsmitteln oder dispergiert in Wasser vorliegen.

Bevorzugt sind lösungsmittelfreie und insbesondere wäßrige Systeme.

Die strahlungshärtbaren Verbindungen können dazu mit Hilfe von Emulgatoren oder Schutzkolloiden in Wasser dispergiert werden, falls die Verbindungen nicht schon durch einen Gehalt von hydrophilen Gruppen selbst dispergierbar sind.

Die strahlungshärtbaren Massen enthalten vorzugsweise mindestens einen Photoinitiator für die photochemische Polymerisation von radikalisch polymerisierbaren Verbindungen.

In Betracht kommen z.B. Mono- oder Bisacylphosphinoxide, Benzophenone, Hydroxyacetophenone, Phenylglyoxylsäure und ihre Derivate oder Gemische dieser Photoinitiatoren.

Die strahlungshärtbaren Massen enthalten vorzugsweise 0,1 bis 10 Gew.-Teile Photoinitiatoren, besonders bevorzugt 1 bis 3 Gew.-Teile Photoinitiatoren, bezogen auf 100 Gew.-Teile strahlungshärtbare Verbindungen.

Neben den Photoinitiatoren und strahlungshärtbaren Verbindungen können die strahlungshärtbaren Massen weitere Bestandteile enthalten. Genannt seien insbesondere Pigmente, Verlaufsmittel und Stabilisatoren. Für die Anwendungen im Außenbereich, d.h. für Beschichtungen, welche dem Tageslicht direkt ausgesetzt sind, enthalten die Massen insbesondere UV-Absorber und Radikalfänger.

UV Absorber wandeln UV-Strahlung in Wärmeenergie um. Bekannte UV-Absorber sind Hydroxybenzophenone, Benzotriazole, Zimtsäureester und Oxalanilide.

Radikalfänger binden intermedär gebildete Radikale. Bedeutende Radikalfänger sind sterisch gehinderte Amine, welche als HALS (Hindered Amine Light Stabilizers) behandelt sind.

Für Außenanwendungen beträgt der Gehalt an UV-Absorbern und Radikalfängern vorzugsweise jeweils 0,1 bis 5 Gew.-Teile, besonders bevorzugt 0,5 bis 3 Gew.-Teile, ganz besonders bevorzugt 2 bis 3 Gew.-Teile, bezogen auf 100 Gew.-Teile der strahlungshärtbaren Verbindungen.

Im übrigen kann die strahlungshärtbare Masse neben strahlungshärtbaren Verbindungen auch noch Verbindungen enthalten, die durch andere chemische Reaktionen zur Härtung beitragen. In Betracht kommen z.B. Polyisocyanate, welche mit Hydroxyl- oder Amingruppen vernetzen.

Die strahlungshärtbaren Massen eignen sich als Beschichtungsmasse, welche im Außenbereich Anwendung finden, also dem Tageslicht ausgesetzt sind.

Derartige Anwendungen sind z.B. Außenbeschichtungen von Gebäuden oder Gebäudeteilen insbesondere Fassaden oder auch Dachsteinen, Beschichtungen auf Fahrzeugen, insbesondere auf Kraftfahrzeugen wie Personenkraftwagen, Lastkraftwagen (kurze Automobile) Schienenfahrzeuge, Flugzeuge.

Insbesondere finden die strahlungshärtbaren Massen als Klarlack (auch Decklack genannt) von Kraftfahrzeugen Verwendung. Der Klarlack eines Kraftfahrzeuges ist die äußerste, der Witterung ausgesetzte Lackschicht.

Die strahlungshärtbaren Massen können dabei zur Beschichtung von Fahrzeugkarosserien oder einzelnen Fahrzeugteilen z.B. aus Metall oder Kunststoff Verwendung finden. Die strahlungshärtbaren Massen können auch auf Folien beschichtet werden und diese Folien wiederum auf das Fahrzeug, z.B. Fahrzeugkarosserie oder Fahrzeugteile geklebt werden.

Bei den zu beschichtenden Substraten kann es sich um metallische Substrate, Kunststoffe, insbesondere auch in Form von Folien, Holz oder keramische Substrate handeln.

Die strahlungshärtbaren Beschichtungsmassen können durch die bekannten Methoden auf die zu beschichtenden Substrate aufgebracht werden. In Betracht kommen insbesondere Auftragsverfahren wie Spritzen, Aufrollen, Aufrakeln.

Die Härtung kann durch Strahlenhärtung mit UV-Licht erfolgen, wozu unter Umständen auch der UV-Anteil des Tageslichts ausreichen kann. Vorzugsweise werden jedoch handelsübliche UV-Lampen zur Strahlenhärtung verwendet. Die Härtung kann auch durch Elektronenstrahlen erfolgen.

Die mit den strahlenhärtbaren Massen hergestellten Beschichtungen zeigen eine hohe Beständigkeit gegen Witterungseinflüsse, insbesondere eine geringe Vergilbungsneigung und eine hohe Hydrolysestabilität und sehr gute mechanische Eigenschaften, insbesondere eine hohe Flexibilität und Härte.

### Beispiele

### I Herstellung

### Beispiel 1 (B1)

### Herstellung eines Polycarbonatacrylates aus Hexandiol:

118 g Diethylcarbonat und 236 g Hexandiol werden in einem Reaktionskolben vorgelegt und 4 g Kaliumhydroxid bei Raumtemperatur zugegeben. Dann erhitzt man auf 135°C Außentemperatur. Bis zu einer Innentemperatur von 125°C destillieren 75 ml Ethanol ab. Man kühlt ab, gibt zuerst 7 g Schwefelsäure langsam zu, dann 0,5 g Hydrochinonmonomethylether, 0,5 g Kerobit TBK, 0,25 g CuCl, 288 g Acrylsäure und 140 g Cyclohexan. Bei einer Außentemperatur von 140°C wurde 8 h am Wasserauskreiser erhitzt und ca. 75 g Wasser/Acrylsäuregemisch abgeschieden. Die Lösung wurde abgekühlt, mit NaCL und NaOH Lösung gewaschen und das Lösungsmittel abdestilliert. Es resultiert eine schwach gelb gefärbte Flüssigkeit. Das Infrarotsprektrum zeigt eine Carbonat und Acrylatbande. Die Verbindung enthält im Mittel 1 Carbonatgruppe und 2 Acrylgruppen.

### Herstellung eines witterungsstabilen Lackes:

Zu 70 Teilen eines Urethanacrylats, hergestellt durch Umsetzung von Isocyanurat des Hexamethylendiisocyanats mit Hydroxyethylacrylat werden 30 Teile des aus Hexandiol hergestellten Polycarbonatacrylates und 4 Gew.% des Photoinitiators Darocure 1173 (Ciba Geigy) zugesetzt. Viskosität 10,4 Pas.

### Vergleichsbeispiel 1: (V1)

Es wird ein Lack wie in Beispiel 1 hergestellt, jedoch wird anstatt des Polycarbonatacrylats Hexandioldiacrylat eingesetzt.

### Vergleichsbeispiel (V2)

Es wird ein Lack wie in Beispiel 1 hergestellt, jedoch wird anstatt des Polycarbonatacrylats Tripropylenglykoldiacrylat eingesetzt.

### Beispiel 2 (B2)

Es wird ein Lack entsprechend Beispiel 1 hergestellt, der zusätzlich 0,5 % des Photoinitiators Lucirin TPO, 2 % Tinuvin 400 (UV Absorber) und 1 % Tinuvin 292 (HALS) enthält.

### Vergleichsbeispiel 3 (V3)

Es wird ein Lack entsprechend Beispiel 2 hergestellt, der anstatt des Carbonatacrylat Hexandioldiacrylat enthält.

### Beispiel 3 (B3)

11,8 g Diethylcarbonat, 28,8 g Cyclohexandimethanol und 0,37 g Dibutoxydibutylzinn werden bei einer Außentemperatur von 150°C 4 h erhitzt. Das entstehende Ethanol wird über eine Füllkörperkole bei einem Rücklaufverhältnis von 10:1 abdestilliert. Nachdem 4,6 g Ethanol abdestilliert sind, wird auf RT abgekühlt, 40 g Ethylacrylat zugeben und bei 120°C Außentemperatur 1 h erhitzt. Nachdem 20 g Ethanol abdestillierten wurde das überschüssige Ethylacrylat unter Vakuum bei 70°C entfernt.

### Viskosität: 4,4 Pas

### II Anwendungstechnische Prüfungen

### Pendeldämpfung

Die Lacke werden mit 100 µm Schichtdicke (naß) auf Bleche aufgerakelt und anschließend mit einem Hg Hochdruckstrahler (120 W/cm) 2 mal belichtet (Objektabstand 10 cm, Geschwindigkeit des Transportbandes 10 m/min). Die Pendeldämpfung (DIN 53 157) ist ein Maß für die Härte der Beschichtung. Die Angabe erfolgt in Sekunden (s), wobei hohe Werte hohe Härte bedeuten.

### Erichsentiefung

Die Lacke werden wie oben aufgetragen und belichtet, die Schichtdicke betrug jedoch 50 µm (naß). Die Erichsentiefung (DIN 53 156) ist ein Maß für die Flexibilität, Elastizität. Die Angabe erfolgt in Millimeter (mm), wobei hohe Werte, hohe Flexibilität bedeuten.

### Chemikalienbeständigkeit

Die Lacke werden wie oben aufgetragen und belichtet, die Schichtdicke betrug jedoch 60 µm (naß). Auf die gehärtete Beschichtung wurden Tropfen von verschiedenen Chemikalien bei unterschiedlichen Temperaturen aufgebracht. Nach einer Einwirkzeit von 24 h wird festgestellt, ab welcher Temperatur zum ersten Mal eine Schädigung der Lackoberfläche zu beobachten ist.

### Reaktivität

Die Lacke wurden aufgetragen und belichtet, wie bei der Pendeldämpfung beschrieben. Die Bandgeschwindigkeit wurde variiert. Es wird die Bandgeschwindigkeit bestimmt, bei der noch Durchhärtung erfolgt, d.h. die Oberfläche durch den Fingernagel nicht angeritzt wird.

### Xenontest

Mit einem 25 g Spiralrakel wird der Lack auf weiße Basislackbleche aufgetragen und 2 mal mit UV Licht ausgehärtet. (Transportband: 5 m/min).

Der Xenontest wurde dann gemäß DIN 53387/89 durchgeführt, wobei die Proben um ihre Xenonlampe rotieren und ständig auf die Lampe ausgerichtet sind. Die Dauer der Benässung beträgt 18 Minuten, die Trockendauer 112 Minuten je Cyclus.

Die Ergebnisse sind in den nachfolgenden Tabelle aufgelistet:

**Tabelle 1**

| Chemikalienbeständigkeit | | | |
|---|---|---|---|
| Chemikalie | B1 | V1 | V2 |
| Pankreatin + H₂O 1:1 | 62°C | 60°C | 53°C |
| 5 %ige, wäßrige NaOH | 40°C | 40°C | 40°C |
| 10 %ige, wäßrige H₂SO₄ | 43°C | 40°C | 42°C |

Insbesondere die Säurebeständigkeit, welche in witterungsstabilen Lacken eine wichtige Rolle spielt, ist bei dem Lack gemäß Beispiel 1 verbessert.

**Tabelle 2**

| Mechanische Eigenschaften und Reaktivität | | | |
|---|---|---|---|
| | B1 | V1 | V2 |
| Pendeldämpfung (s) | 67 | 102 | 101 |
| Erichsen Tiefung (mm) | 4,8 | 2,4 | 4,3 |
| Reaktivität (m/min) | 15 | 20 | 15 |

**Tabelle 3**

| Xenon Test (Witterungsstabilität) | | | |
|---|---|---|---|
| | B1 | V1 | V2 |
| Schädigung nach h (Riss und/oder Glanzverlust) | > 1400 | 1280 | 940 |

**Tabelle 4**

| Mechanische Eigenschaften und Reaktivität | | | |
|---|---|---|---|
| | B2 | V3 | B3 |
| Pendeldämpfung (s) | 60 | 95 | 101 |
| Erichsen Tiefung (mm) | 5,2 | 2,5 | 5,7 |
| Reaktivität (m/min) | 5 | 5 | 5 |

**Tabelle 5**

| Xenon Test (Witterungsstabilität) | | | |
|---|---|---|---|
| | Bsp. 2 | V3 | B3 |
| Schädigung nach h (Risse und/oder Glanzverlust) | > 2800 | >2800 | >2800 |

Der Vergleich zeigt, daß man witterungsstabile Lacke mit deutlich verbesserter Flexibilität erhält.

## Patentansprüche

1. Verwendung von strahlungshärtbaren Massen, welche 0,5 bis 100 Gew.-%, bezogen auf die Gesamtmenge der strahlungshärtbaren Verbindungen, Carbonat(meth)acrylate enthalten, als Beschichtungsmasse für Außenanwendungen.

2. Verwendung gemäß Anspruch 1, wobei der Gehalt an Carbonat(meth)acrylaten 5 bis 80 Gew.-% beträgt.

3. Verwendung gemäß Anspruch 1 oder 2, wobei es sich bei den Carbonat(meth)acrylaten um Verbindungen mit im Mittel 1 bis 5 Carbonatgruppen und im Mittel 2 bis 4 (Meth)acrylgruppen handelt.

4. Verwendung gemäß einem der Ansprüche 1 bis 3, wobei es sich bei den Carbonat(meth)acrylaten um Verbindungen mit im Mittel 1 bis 3 Carbonatgruppen und 2 (Meth)Acrylgruppen handelt.

5. Verwendung gemäß einem der Ansprüche 1 bis 4, wobei es sich um aliphatische Carbonat(meth)acrylate handelt.

6. Verwendung gemäß einem der Ansprüche 1 bis 5, wobei das zahlenmittlere Molekulargewicht Mₙ der Carbonat(meth)acrylate kleiner 3000 g/mol ist.

7. Verwendung gemäß einem der Ansprüche 1 bis 6, wobei die strahlungshärtbare Masse
5 bis 80 Gew.-% Carbonat(meth)acrylaten a)
20 bis 95 Gew.-% Urethan(meth)acrylate, Epoxid(meth)acrylate oder Melamin(meth)acrylate b)
0 bis 50 Gew.-% von a) und b) verschiedene Verbindungen mit mindestens einer (Meth)acrylgruppe c) und
0 bis 50 Gew.-% strahlungshärtbare Verbindungen ohne (Meth)acrylgruppen d),
bezogen auf die Gesamtmenge der strahlungshärtbaren Verbindungen, enthält.

8. Verwendung gemäß einem der Ansprüche 1 bis 7, wobei die strahlungshärtbare Masse
0 bis 10 Gew.-Teile mindestens eines Photoinitiators
0,1 bis 5 Gew.-Teile mindestens eines UV-Absorbers und
0,1 bis 5 Gew.-Teile mindestens eines Radikalfängers,
bezogen auf 100 Gew.-Teile strahlungshärtbare Verbindungen, enthält.

9. Verwendung der strahlungshärtbaren Masse gemäß einem der Ansprüche 1 bis 8 zur Beschichtung von Fahrzeugkarosserien oder Fahrzeugteilen.

10. Verwendung der strahlungshärtbaren Masse gemäß einem der Ansprüche 1 bis 8 als Klarlack in der Kraftfahrzeuglackierung.

11. Mit einer strahlungshärtbaren Masse gemäß einem der Ansprüche 1 bis 8 beschichtete Fahrzeugkarosserien oder Fahrzeugteile.

12. Strahlungshärtbare Masse, enthaltend
5 bis 80 Gew.-% Carbonat(meth)acrylate a)
20 bis 95 Gew.-% Urethan(meth)acrylate, Epoxid(meth)acrylate oder Melamin(meth)acrylate b)
0 bis 50 Gew.-% von a) und b) verschiedene Verbindungen mit mindestens einer (Meth)acrylgruppe c) und
0 bis 50 Gew.-% strahlungshärtbare Verbindungen ohne(Meth)acrylgruppen d),
bezogen auf die Gesamtmenge der strahlungshärtbaren Verbindungen.

## Claims

1. The use of a radiation-curable composition comprising from 0.5 to 100 % by weight, based on the overall amount of the radiation-curable compounds, of carbonate (meth)acrylates as a coating composition for exterior applications.

2. The use as claimed in claim 1, where the content of carbonate (meth)acrylates is from 5 to 80 % by weight.

3. The use as claimed in claim 1 or 2, where the carbonate (meth)acrylates are compounds having on average from 1 to 5 carbonate groups and on average from 2 to 4 (meth)acrylic groups.

4. The use as claimed in any one of claims 1 to 3, where the carbonate (meth)acrylates are compounds having on average from 1 to 3 carbonate groups and 2 (meth)acrylic groups.

5. The use as claimed in any one of claims 1 to 4, where the carbonate (meth)acrylates are aliphatic.

6. The use as claimed in any one of claims 1 to 5, where the number-average molecular weight Mₙ of the carbonate (meth)acrylates is less than 3000 g/mol.

7. The use as claimed in any one of claims 1 to 6, where the radiation-curable composition comprises
from 5 to 80 % by weight of carbonate (meth)acrylates a)
from 20 to 95 % by weight of urethane (meth)acrylates, epoxy (meth)acrylates or melamine (meth)acrylates b)
from 0 to 50 % by weight of compounds c) which have at least one (meth)acrylic group and are different from a) and b), and
from 0 to 50 % by weight of radiation-curable compounds d) without (meth)acrylic groups,
based on the overall amount of radiation-curable compounds.

8. The use as claimed in any one of claims 1 to 7, where the radiation-curable composition comprises
from 0 to 10 parts by weight of at least one photoinitiator
from 0.1 to 5 parts by weight of at least one UV absorber and
from 0.1 to 5 parts by weight of at least one free-radical scavenger,
per 100 parts by weight of radiation-curable compounds.

9. The use of a radiation-curable composition as claimed in any one of claims 1 to 8 for coating vehicle bodies or vehicle parts.

10. The use of a radiation-curable composition as claimed in any one of claims 1 to 8 as a clearcoat in automotive finishing.

11. A vehicle body or vehicle part coated with a radiation-curable composition as claimed in any one of claims 1 to 8.

12. A radiation-curable composition comprising
from 5 to 80 % by weight of carbonate (meth)acrylates a)
from 20 to 95 % by weight of urethane (meth)acrylates, epoxy (meth)acrylates or melamine (meth)acrylates b)
from 0 to 50 % by weight of compounds c) which have at least one (meth)acrylic group and are different from a) and b), and
from 0 to 50 % by weight of radiation-curable compounds d) without (meth)acrylic groups,
based on the overall amount of radiation-curable compounds.

## Revendications

1. Utilisation de masses durcissables par irradiation, contenant de 0,5 à 100% en poids, par rapport à la quantité totale des composés durcissables par irradiation, de carbonate - (méth)acrylate, en tant que masses de revêtements pour applications en extérieur.

2. Utilisation selon la revendication 1, où la teneur en carbonate - (méth)acrylate est de 5 à 80% en poids.

3. Utilisation selon la revendication 1 ou 2, où les carbonates - (méth)acrylates sont des composés comportant en moyenne de 1 à 5 groupes carbonate et en moyenne de 2 à 4 groupes (méth)acryle.

4. Utilisation selon l'une des revendications 1 à 3, où les carbonates - (méth)acrylates sont des composés comportant en moyenne de 1 à 3 groupes carbonate et 2 groupes (méth)acryle.

5. Utilisation selon l'une des revendications 1 à 4, où il s'agit de carbonates - (méth)acrylates aliphatiques.

6. Utilisation selon l'une des revendications 1 à 5, où la moyenne numérique de poids moléculaire Mₙ du carbonate - (méth)acrylate est inférieure à 3000 g/mole.

7. Utilisation selon l'une des revendications 1 à 6, où la masse durcissable par irradiation contient
de 5 à 80% en poids de carbonate - (méth)acrylate a)
de 20 à 95% en poids d'uréthanne (méth)acrylate, d'époxy (méth)acrylate ou de mélamine (méth)acrylate b)
de 0 à 50% en poids de composés différents de a) et b) comportant au moins un groupe (méth)acryle et
de 0 à 50% en poids de composés durcissables par irradiation d) ne comportant pas de groupes (méth)acryle,
par rapport à la quantité totale des composés durcissables par irradiation.

8. Utilisation selon l'une des revendications 1 à 7, où la masse durcissable par irradiation contient
de 0 à 10 parties en poids d'au moins un photoinitiateur
de 0,1 à 5 parties en poids d'au moins un absorbeur d'UV et
de 0,1 à 5 parties en poids d'au moins un capteur de radicaux,
par rapport à 100 parties en poids de composés durcissables par irradiation.

9. Utilisation des masses durcissables par irradiation selon l'une des revendications 1 à 8 pour le revêtement de carrosseries de véhicules automobiles ou de parties de véhicules automobiles.

10. Utilisation des masses durcissables par irradiation selon l'une des revendications 1 à 8 comme vernis clair dans la peinture automobile.

11. Carrosseries de véhicules automobiles ou parties de véhicules automobiles revêtues d'une masse durcissable par irradiation selon l'une des revendications 1 à 8.

12. Masses durcissables par irradiation, contenant
de 5 à 80% en poids de carbonate - (méth)acrylate a)
de 20 à 95% en poids d'uréthanne (méth)acrylate, d'époxy (méth)acrylate ou de mélamine (méth)acrylate b)
de 0 à 50% en poids de composés différents de a) et b) comportant au moins un groupe (méth)acryle c), et
de 0 à 50% en poids de composés durcissables par irradiation ne comportant pas de groupes (méth) acryle d),
par rapport à la quantité totale des composés durcissables par irradiation.
